# FASCICULE DE BREVET EUROPEEN

(11) **EP 3 451 138 B1**
(45) Date de publication et mention de la délivrance du brevet: **10.05.2023**
(21) Numéro de dépôt: 18189550.9
(22) Date de dépôt: 17.08.2018
(51) Int. Cl.: G06F 3/04886, G06F 3/039, G09B 21/00, G06F 21/83

(54) **DISPOSITIF DE SAISIE SUR UNE SURFACE TACTILE ET PROCÉDÉ CORRESPONDANT**
ERFASSUNGSVORRICHTUNG AUF EINER BERÜHRUNGSEMPFINDLICHEN OBERFLÄCHE UND ENTSPRECHENDES VERFAHREN
INPUT DEVICE ON A TOUCH SURFACE AND CORRESPONDING METHOD

(30) Priorité: 31.08.2017 FR 1758054
(43) Date de publication de la demande: 06.03.2019
(73) Titulaire: Banks and Acquirers International Holding, 75015 Paris (FR)
(72) Inventeur: BLANC, Olivier, 26660 Pont de L'Isere (FR)
(74) Mandataire: Germain Maureau

(56) Documents cités:
- DE-A1-102012 100 717
- US-A1- 2011 248 947
- US-A1- 2013 302 777
- US-A1- 2015 138 098
- US-A1- 2015 205 370

## Description

### 1. Domaine

La présente technique se rapporte au domaine des dispositifs de saisie de données. Plus précisément, la présente technique concerne un dispositif de saisie destiné à être apposé sur une dalle tactile. La présente technique s'applique en particulière à la saisie de codes confidentiels ou de codes d'identification personnels sur une surface tactile, par exemple pour les personnes malvoyantes s.

### 2. Art Antérieur

Les écrans tactiles sont largement utilisés pour saisir des données au sein de systèmes informatisés de traitement de données. Par exemple, les téléphones mobiles, les ordinateurs, tablettes, ou encore les terminaux de paiement et les distributeurs automatiques de billets (DAB) disposent d'écrans tactiles pour faciliter la saisie des données par les utilisateurs.

Pour effectuer une saisie, un utilisateur peut toucher un ou plusieurs caractères sur un clavier virtuel affiché sur l'écran tactile, en utilisant un doigt ou un stylet. Il n'est ainsi plus nécessaire de disposer un clavier physique pour saisir des textes. Cependant, la saisie des textes avec un clavier virtuel présente des inconvénients, notamment pour les personnes malvoyantes. En effet, à la différence des claviers physiques, les claviers virtuels sont affichés sur un écran plat et ne permettent pas aux personnes malvoyantes de se repérer spatialement sur les touches virtuelles.

Cet inconvénient est en particulier gênant pour les terminaux de paiement ou des distributeurs automatiques de billets (DAB) qui disposent d'un écran tactile. En effet, lorsqu'une personne malvoyante utilise sa carte bancaire pour effectuer un paiement ou pour retirer des billets, il doit saisir son code PIN pour s'authentifier. Il n'est pas possible pour cette personne malvoyante de saisir son code PIN sur un clavier virtuel affiché sur un écran tactile.

Une directive européenne en cours de rédaction oblige les commerçants et banquiers à fournir une solution pour les personnes malvoyantes. La solution de l'état de à technique consiste à fournir un clavier physique électronique relié à un terminal de paiement, même si un clavier virtuel est disponible sur l'écran tactile. Le coût de fabrication des terminaux de paiement ou des distributeurs automatiques de billets (DAB) est ainsi augmenté, sans que la solution soit réellement intéressante, notamment des points de vue technique et esthétique. En effet, le clavier physique destiné aux personnes malvoyantes doit être sécurisé pour éviter le piratage, augmentant le cout et ce clavier n'est généralement pas esthétiquement intégré dans la solution tactile. La problématique est la même pour les terminaux de communication qui se transforment provisoirement en terminaux de paiement : pour effectuer une opération de paiement sur un terminal de communication tactile (smartphone, tablette) la personne malvoyante est souvent contrainte de requérir l'assistance d'une tierce personne afin que celle-ci puisse saisir les informations bancaires. Bien souvent, pour ces situations il n'existe même pas de clavier physique à ajouter au terminal de communication.

Il existe ainsi un besoin de fournir une solution permettant aux personnes malvoyantes d'utiliser les dispositifs (terminal de paiement, terminal de communication par exemple) disposant d'un écran tactile, pour effectuer une saisie de données, tout en réduisant le coût de cette solution et conservant l'aspect esthétique engendré par l'utilisation d'écrans tactiles.

### 3. Résumé

L'invention permet de résoudre ces problèmes de l'art antérieur. L'invention permet notamment de faciliter les opérations de saisie sur écran tactile, notamment pour les personnes malvoyantes. La solution de l'invention cependant n'est pas limitée à une utilisation par une personne malvoyante et peut être utilisée par toute personne, notamment pour sécuriser la saisie d'informations, confidentielles ou non, sur un écran tactile.

Plus particulièrement, l'invention se rapporte à un dispositif de saisie de données, destiné à être apposé sur une dalle tactile d'un terminal, selon la revendication indépendante 1.

Ainsi, le terminal sur lequel le dispositif est apposé est à même de détecter la présence de ce dispositif dès que celui-ci entre en contact avec la dalle tactile (de l'écran) du terminal grâce à la zone de contact chargée électriquement.

Selon un mode de réalisation particulier, la face inférieure comprend en outre trois zones de contact chargées électriquement.

Ainsi, le dispositif de saisie comprend, intrinsèquement, une signature. Cette signature est constituée des trois points de contact avec la dalle tactile du terminal. Lorsque le dispositif de saisie est posé sur une surface tactile, et plus particulièrement une surface tactile capacitive, la couche de la surface tactile qui accumule les charges transmet certaines de ces charges aux trois points de contact. Le terminal est alors en mesure de détecter que ces points de contacts correspondent à une géométrie particulière représentative du dispositif de saisie de données. Le terminal peut alors activer un mode de saisie de données correspondant à la saisie par l'intermédiaire du dispositif de saisie de données.

Selon une caractéristique particulière, le dispositif est constitué de matière plastique transparente.

Ainsi le dispositif de saisie est sécuritaire : en effet, du fait de la transparence du dispositif, il n'est pas possible d'y adjoindre des mécanismes frauduleux de surveillance des saisies. En effet, si de tels mécanismes étaient ajoutés, ils seraient immédiatement détectés du fait de la transparence du dispositif de saisie de données.

Selon une caractéristique particulière, au moins un sous-ensemble des touches de saisie de l'ensemble des touches de saisie de la matrice de zones de saisie est de forme rectangulaire.

Ainsi, de part cette forme rectangulaire, il est plus aisé, pour une personne mal voyante, de se repérer spatialement et donc d'utiliser le dispositif de saisie de données de manière simple et intuitive.

Selon une caractéristique particulière, la matrice de zones de saisie formant clavier comprend un ensemble de touches de saisie plane formée sur la surface supérieure de la plaque et séparées l'une de l'autre par une grille de profilés, de hauteurs et/ou de formes prédéterminées.

Ainsi, les touches du clavier sont planes, et ne comprennent aucune indication spécifique quant à la fonction de la touche en question. Cela permet de renforcer la sécurité en évitant qu'une personne malveillante surveille les touches qui sont utilisées pour la saisie. La personne malvoyante se repère à l'aide de la grille de profilés qui délimitent les touches les unes par rapport aux autres en fonction des formes et ou des hauteurs de ces profilés.

Selon une caractéristique particulière, les formes des profilés de la grille de profilés sont adaptées de sorte à former une pluralité de repères de positionnement desdites touches dudit clavier.

Ainsi, une personne malvoyante est en mesure de repérer l'emplacement des touches du clavier sur le dispositif en effleurant ou en touchant les profilés : on définit ainsi l'équivalent à au moins un fil d'Ariane, qui lorsqu'il est suivi par la personne malvoyante, en utilisant un ou plusieurs doigts, permet de suivre la grille de touches et identifier l'endroit où se trouve telle ou telle touche de manière simple et intuitive.

Selon un mode de réalisation particulier, ledit ensemble de touches de saisie comprend treize touches, ledit ensemble étant décomposé un sous ensemble de dix touches numériques, représentative d'un clavier numérique et un sous ensemble de trois touches de validation.

Selon une caractéristique particulière, l'emplacement correspondant à la touche numéro cinq comprend, en son centre, un téton de repérage.

Selon un mode de réalisation particulier, l'ensemble de touche formant clavier est représentatif d'un clavier de saisie d'un code confidentiel sur un terminal de paiement.

Ainsi, la personne malvoyante est en mesure, à l'aide du ou des fils d'ariane et de cet indicateur de positionnement (le téton), de visualiser mentalement l'ensemble du clavier et donc de sélectionner très rapidement et très précisément les emplacements de touches de ce clavier pour effectuer la saisie des informations demandées.

Selon une caractéristique particulière, l'épaisseur de ladite plaque est comprise entre 1 mm et 3 mm.

Ainsi, la saisie de l'information peut être réalisée sans qu'il soit nécessaire de modifier le terminal sur lequel le dispositif de saisie est apposé. En effet, l'épaisseur de la plaque ne s'oppose pas aux mécanismes de fonctionnement de l'écran tactile, qui reste donc utilisable de la même manière. L'appui sur une touche « aveugle » du dispositif de saisie provoque, comme en l'absence de celui-ci, un transfert de charge électrique et donc une identification des coordonnées de la saisie.

Selon un autre aspect, l'invention se rapporte également à un procédé de saisie de données sur une dalle tactile d'un terminal, procédé de saisie sur un écran tactile, à l'aide d'un dispositif de saisie tel que décrit précédemment, un tel procédé comprenant :
- une étape d'pose, sur un écran tactile dudit terminal, d'un dispositif de saisie de données ;
- une étape de détection, par le terminal, de la pose dudit dispositif de saisie de données ; et
- une étape de saisie, par un utilisateur, de données sur la surface dudit dispositif de saisie de données.

Selon un autre aspect, l'invention se rapporte également à un système de saisie de données, système comprenant un terminal muni d'un écran tactile et un dispositif de saisie de donnée tel que décrit précédemment.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 illustre un dispositif de saisi selon un mode de réalisation de l'invention;
- la figure 2 illustre le dispositif de saisie de données apposé sur une dalle tactile d'un terminal ;
- la figure 3 est une vue de coupe du dispositif de saisie, au niveau de la troisième rangée de touches, présentant un mode de réalisation des profilés de reprérage.

### 5. Description détaillée

### 5.1. Principe général

Le principe général de l'invention consiste à proposer un dispositif physique de saisie de données destiné à être apposé sur un écran tactile d'un terminal. Le dispositif comprend une plaque comprenant une surface supérieure et une surface inférieure plane. La face supérieure comprend une matrice de zones de saisie formant clavier. Le fond de la matrice de zones de saisie est suffisamment fin pour qu'une touche sur cette matrice soit détectée par l'écran tactile au travers de la plaque. Lorsque le dispositif est apposé sur l'écran tactile (que ce soit librement ou sur une zone spécifique de cet écran), l'utilisateur (par exemple une personne malvoyante) peut toucher directement les touches sur la matrice de zones de saisie pour entrer des caractères sur l'écran tactile. Dans ce mode de réalisation général, il n'est pas nécessaire de disposer de composants électriques supplémentaires pour détecter les touches sur les zones de saisie du dispositif de saisie de données, de par la finesse du fond de la matrice des zones de saisie. D'une manière générale, le fond de cette matrice à une épaisseur de l'ordre du millimètre, afin de permettre une bonne captation de la pose de doigt. Cette épaisseur est bien entendu adaptable en fonction de la matière utilisée pour former la plaque en question. D'une manière générale, l'épaisseur du dispositif peut être comprise entre 1 et 3 millimètres.

Les dimensions et la disposition des touches de la matrice de zones de saisie peuvent être préalablement connues par les utilisateurs pour que celles-ci puissent se repérer sur la matrice de zones de saisie. La matrice de zones de saisie peut également comprendre des motifs embossés ou creusés pour que les utilisateurs puissent se repérer, même sans connaissances préalables des dimensions et des dispositions de la matrice de saisie.

Dans au moins un mode de réalisation, la face inférieure de la plaque peut optionnellement comprendre au moins une zone de contact chargée électriquement. Cette zone de contact chargée électriquement permet au terminal de détecter la présence et/ou la position du dispositif de saisie de données (plusieurs zones de contact dans ce cas). Ainsi, l'écran tactile est capable de détecter la présence et/ou la position du dispositif de saisie de données. Le terminal de communication peut donc connaître la position de la matrice de zones de saisie par rapport à la position de la zone de contact chargée électriquement, et également les dimensions et les dispositions de la matrice de zones de saisie (lorsqu'il est envisagé de disposer de plusieurs types de matrices différentes, tant en taille qu'en fonctionnalité ou en nombre de touches). Plus particulièrement, dans ce type de mode de réalisation, la face inférieure de la plaque comprend par exemple trois zones de contact chargées électriquement : une première zone est positionnée dans le coin supérieur gauche de la face inférieure de la plaque. Les deux autres zones sont positionnées de sorte à ce que la première zone forme l'angle droit d'un triangle rectangle non isocèle. Le terminal de communication comprend une application ou un module spécifique qui permet d'identifier ce triangle et donc de connaître la position et l'orientation du dispositif de saisie par rapport à l'écran. De cette manière, lorsque l'utilisateur saisit des informations (par exemple un code PIN) à l'aide du dispositif de saisie, le terminal est en mesure de reconnaître les caractères saisis (quelle que soit la position et l'orientation du dispositif) et ce sans même avoir besoin d'afficher le clavier sur l'écran. Le dispositif de saisie de l'invention permet donc d'augmenter le niveau de sécurisation de la saisie d'une information sur un écran tactile. L'utilisation de zones de contact électriquement chargées n'est pas la seule manière d'élever le niveau de sécurité offert lors de la saisie d'information. D'autres techniques peuvent également être mises en oeuvre. Pour sécuriser la saisie des données, il faut et il suffit que la mise en oeuvre du dispositif de saisie de données provoque la reconnaissance d'un modèle permettant d'identifier le dispositif ou la touche saisie de manière unique. À l'aide de cette caractéristique, il n'est donc pas nécessaire d'afficher un clavier sur l'écran du terminal de communication. Ainsi, une personne mal intentionnée ne peut pas prendre connaissance de l'information saisie en visualisant l'écran. Le terminal peut donc détecter le contact d'un doigt ou d'un stylet sur une touche de saisie de la matrice de zones de saisie. Le caractère correspondant à la touche de saisie est déterminé par le terminal selon la position du dispositif de saisie préalablement calculée. Dans d'autres modes de réalisation, le terminal détermine l'emplacement sur lequel le dispositif de saisie doit être posé puis demande à un utilisateur de poser le dispositif de saisie à cet emplacement. Une fois que le dispositif de saisie est posé à l'emplacement indiqué par le terminal de communication, l'utilisateur peut alors utiliser le dispositif de saisie pour effectuer la saisie des données.

Les avantages fournis par le dispositif de saisie de l'invention sont nombreux. En premier lieu, il permet aux personnes malvoyantes d'effectuer seules des saisies de données sur des écrans tactiles. Il permet aussi d'effectuer des saisies pour des personnes ne présentant pas de handicap particulier, mais qui ne se sentent pas à l'aise vis-à-vis des écrans tactile. Il permet également d'élever le niveau de sécurité de saisie des données (notamment confidentielles) sur les écrans tactiles en ne nécessitant pas l'affichage d'un clavier virtuel : il permet d'éviter que des personnes mal intentionnées ne repèrent les données saisies.

### 5.2. Description d'un mode de réalisation de l'invention

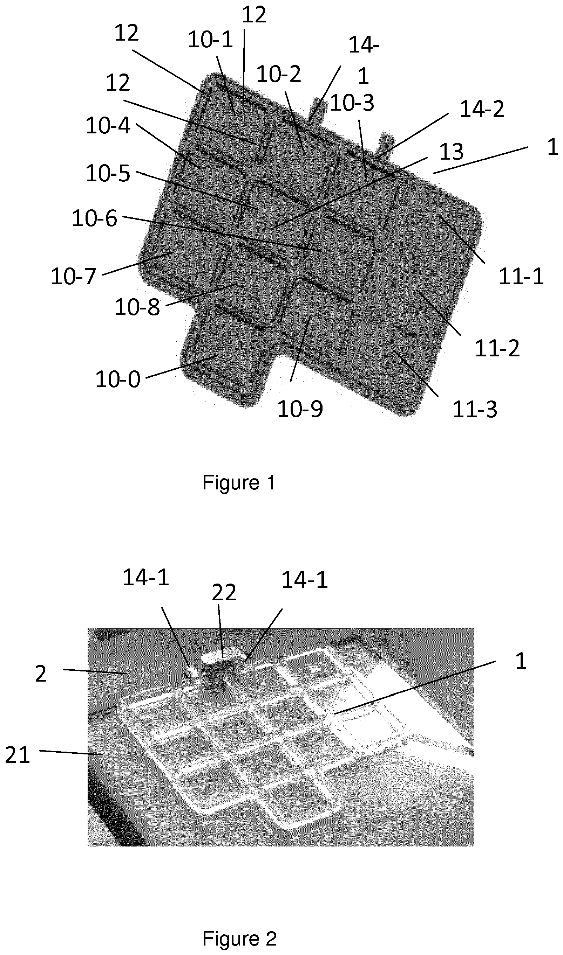

On décrit en relation avec les figures 1 et 2, un mode de réalisation du dispositif de saisie de données selon l'invention. Comme illustré dans les figures 1 et 2, le dispositif de saisie de données comprend une plaque 1 destiné à être apposé sur une dalle tactile 21 d'un terminal de communication 2. La plaque 1 globalement rectangulaire est constituée de matière plastique (pouvant être transparente) et qui comprend une face supérieure (illustrée dans les figures 1 et 2) et une face inférieure (non-visible dans les figures 1 et 2).

La surface supérieure comprend une matrice de zones de saisie formant clavier. La matrice de zones de saisie comprend un ensemble de touches de saisie rectangulaires regroupées dans un premier sous-ensemble et un deuxième sous-ensemble. L'ensemble de touches de saisie est représentatif d'un clavier de saisie d'un code confidentiel sur un terminal de paiement. Le premier sous-ensemble comprend dix touches numériques 10-1, 10-2, 10-3, 10-4, 10-5, 10-6, 10-7, 10-8, 10-9 et 10-0 représentant les chiffres 1, 2, 3, 4, 5, 6, 7, 8, 9 et 0. Les touches numériques sont globalement planes et ne comprennent aucune indication spécifique quant aux chiffres que les touches numériques représentent. Cela permet d'éviter qu'une personne malveillante surveille les touches qui sont utilisées pour la saisie. La touche du chiffre cinq comprend, en son centre, un téton de repérage 13. Les touches des chiffres 1 à 4 et 6 à 9 sont positionnées autour de la touche du chiffre 5, comme à l'accoutumée. Le fait de repérer la touche du chiffre 5 permet à l'utilisateur malvoyant de visualiser mentalement et rapidement les positions des autres touches numériques. Le deuxième sous-ensemble comprend trois touches fonctionnelles : une touche d'annulation 11-1, une touche d'effacement (correction) 11-2 et une touche de validation 11-3. Les touches fonctionnelles comprennent des motifs embossés ou creusés indiquant les fonctions des touches. Par exemple, le motif « X » représente la fonction d'annulation, le motif « < » représente la fonction d'effacement, et le motif « O » représente la fonction de validation. Les touches de la matrice de zones de saisie sont séparées l'une de l'autre par une grille de profilés 12, de hauteurs et de formes prédéterminées. Les formes des profilés de la grille de profilés sont adaptées de sorte à former une pluralité de repères de positionnement des touches du clavier. Plus particulièrement, les profilés forment un ou plusieurs fils d'Ariane, qui permettent à un utilisateur malvoyant de repérer mentalement l'emplacement des touches. Par exemple, les profils forment un fil d'Ariane périphérique, sur tout le pourtour du dispositif de saisie, permettant de délimiter le volume externe du dispositif de saisie. Au niveau de chaque touche, des profils indiquent également l'emplacement de la touche.

L'épaisseur de la plaque dans la zone des touches fonctionnelles est inférieure à celle de la zone des touches numériques. Il y a ainsi un changement de niveau entre les touches numériques et les touches fonctionnelles. Ce changement de niveau permet aux personnes malvoyantes de repérer facilement les touches numériques et les touches fonctionnelles.

Dans le mode de réalisation illustré dans la figure 1, le dispositif de saisie de données comprend également deux broches de fixation 14-1, 14-2. La figure 2 illustre le dispositif de saisie de données apposée sur un écran tactile 21 d'un terminal de communication 2, faisant office de terminal de paiement. Un élément de fixation 22 est disposé au bord de l'écran tactile. Les deux broches de fixation 14-1, 14-2 serrent l'élément de fixation 22 sur les deux côtés, afin d'éviter le glissement du dispositif de saisie de données par rapport l'écran du terminal de communication. Ces deux broches de fixation 14-1, 14-2 permettent d'assurer que le dispositif de saisie de donnée soit apposé sur une zone déterminée sur l'écran tactile.

Le terminal de paiement 2 et le dispositif de saisie de données 1 constituent un système de saisie de données par exemple pour les personnes malvoyantes.

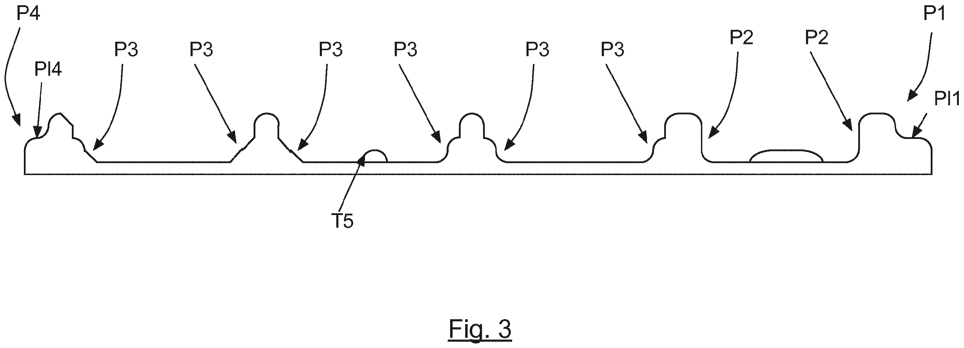

La figure 3 est une illustration à titre d'exemple d'une coupe longitudinale possible du dispositif de la figure 1, au niveau des touches centrales. Elle illustre un mode de réalisation des profils différents pour les touches. Un premier profil P1 permet de déterminer le bord latéral droit du dispositif de saisie. Le profil P2 de la touche de correction (voir figure 1) se présente sous la forme d'une pente verticale. Les profils P3 des touches numériques ont globalement une forme de vague. Ils sont différents du profil P2 et permettant à l'utilisateur malvoyant de différentier les touches numériques des touches de fonction. Le profil extérieur gauche (P4) est également différent du profil extérieur droit (P1), notamment par la taille des plateaux (PL4 vs PL1), permettant ainsi à l'utilisateur de déterminer l'orientation du dispositif lorsqu'il est posé sur l'écran. Le tenon de la touche 5 (T5) est également visible sur cette touche et permet d'identifier rapidement la touche 5.

### 5.3. Procédé de saisie de données

L'invention concerne se rapporte également à un procédé de saisie de données sur une dalle tactile d'un terminal en utiliser le dispositif de saisie de données pour les personnes malvoyantes. un tel procédé comprend :
- une étape de pose, sur une zone d'un écran tactile du terminal, d'un dispositif de saisie de données tel que décrit précédemment;
- une étape optionnelle de détection, par le terminal, de la pose du dispositif (le caractère optionnel de cette étape dépendant des caractéristiques du dispositif, et permettant de détecter l'orientation et la taille du dispositif le cas échéant) ;
- une étape de saisie, par un utilisateur, de données sur la surface du dispositif de saisie de données.

L'étape de pose peut être précédée d'une étape d'affichage d'une zone de pose sur l'écran du terminal, cette zone de pose étant déterminée par le terminal lui-même. Le dispositif de saisie peut ainsi être apposé sur la zone d'accueil affiché sur l'écran par une personne clairvoyante (en cas d'utilisation par une personne malvoyante). Dans ce cas, les broches de fixation et l'élément de fixation ne sont pas nécessaires. Alternativement, l'étape de pose peut comprend une étape de pose de la surface inférieure du dispositif de saisie de données sur l'écran tactile de sorte que les deux broches de fixation serrent l'élément de fixation du terminal. Les deux broches de fixation et l'élément de fixation assurent que le dispositif de saisie soit apposé sur la zone déterminée de l'écran tactile.

Selon une variante de ce procédé, le dispositif de saisie est apposé sur une zone aléatoire sur l'écran tactile du terminal. Dans ce cas, le procédé comprend en outre une étape de détermination de la position du dispositif de saisie de donnée. L'étape de détermination peut comprendre une détection de contacts d'un ou plusieurs doigts sur des touches de la matrice de zones de saisie (le terminal de communication requiert pour cela une saisie, par l'utilisateur, d'une série de touches prédéterminées (par exemple 5-1-3), pour déterminer la position du dispositif de saisie sur l'écran). La position du dispositif de saisie peut ainsi être déterminée selon la position des touches qui ont été saisies, soit simultanément, soit successivement. Par exemple, la personne malvoyante peut toucher les touches numériques 1 et 9 avec deux doigts, lorsque le dispositif de saisie est apposé sur l'écran tactile. Le terminal peut ainsi détecter les positions des touches 1 et 9. Selon les positions des touches 1 et 9, le terminal peut identifier la position de la matrice de clavier sur l'écran tactile.
Lorsque le dispositif est muni des moyens de détection autonome (zones de contact chargées électriquement par exemple), il n'est alors pas nécessaire de faire appel à une pré-saisie de l'utilisateur : le terminal de communication détecte seul la pose du dispositif de saisie et la position de cette pose sur l'écran et peut alors calculer la position des touches et par voie de conséquence interpréter les saisies effectuées par l'utilisateur.

## Revendications

1. Dispositif de saisie de données, destiné à être apposé sur une dalle tactile d'un terminal, dispositif de saisie **caractérisé en ce qu'**il comprend une plaque sensiblement parallélépipédique, ladite plaque comprenant
- une face supérieure, dont au moins une partie comprend une matrice de zones de saisie formant clavier, ladite matrice de zones de saisie étant délimitée sur un bord latéral droit par un premier profil et sur au moins un bord latéral gauche par un deuxième profil différent du premier profil, ladite matrice de zones de saisie comprenant un ensemble de touches de saisie planes séparées l'une de l'autre par une grille de profilés, de hauteurs et/ou de formes prédéterminées formant une pluralité de repères de positionnement desdites touches dudit clavier, l'épaisseur des zones de saisie étant de l'ordre du millimètre, et
- une face inférieure, plane, de pose dudit dispositif.

2. Dispositif selon la revendication 1 **caractérisé en ce que** la face inférieure comprend en outre trois zones de contact chargées électriquement.

3. Dispositif selon la revendication 1, **caractérisé en ce qu'**il est constitué de matière plastique transparente.

4. Dispositif selon la revendication 1, **caractérisé en ce qu'**au moins un sous-ensemble des touches de saisie, de l'ensemble des touches de saisie de la matrice de zones de saisie, est de forme rectangulaire.

5. Dispositif selon la revendication 1, **caractérisé en ce que** ledit ensemble de touches de saisie comprend treize touches, ledit ensemble étant décomposé un sous ensemble de dix touches numériques, représentative d'un clavier numérique et un sous ensemble de trois touches de validation.

6. Dispositif selon la revendication 5, **caractérisé en ce que** l'emplacement correspondant à la touche numéro cinq comprend, en son centre, un téton de repérage.

7. Dispositif selon la revendication 5, **caractérisé en ce que** l'ensemble de touche formant clavier est représentatif d'un clavier de saisie d'un code confidentiel sur un terminal de paiement.

8. Dispositif selon la revendication 1, **caractérisé en ce que** l'épaisseur de ladite plaque est comprise entre 1 mm et 3 mm.

9. Système de saisie de données, système comprenant un terminal muni d'un écran tactile, système **caractérisé en ce qu'**il comprend un dispositif de saisie de données selon l'une des quelconques revendications 1 à 8.

10. Procédé de saisie de données sur une dalle tactile d'un terminal, procédé de saisie **caractérisé en ce qu'**il comprend :
- une étape de pose, sur un écran tactile dudit terminal, d'un dispositif de saisie de données selon l'une quelconque des revendications 1 à 8 ;
- une étape de détection, par le terminal, de la pose dudit dispositif de saisie de données ; et
- une étape de saisie, par un utilisateur, de données sur la surface dudit dispositif de saisie de données.

## Patentansprüche

1. Dateneingabevorrichtung, die vorgesehen ist, um auf einem Touchscreen eines Terminals angebracht zu werden, wobei die Eingabevorrichtung **dadurch gekennzeichnet ist, dass** sie eine im Wesentlichen parallelepipedische Platte umfasst, wobei die Platte umfasst:
- eine obere Seite, von der mindestens ein Abschnitt eine Matrix von Eingabebereichen umfasst, die eine Tastatur bilden, wobei die Matrix von Eingabebereichen an einer rechten Seitenkante durch ein erstes Profil begrenzt ist und an mindestens einer linken Seitenkante durch ein zweites Profil, das sich vom ersten Profil unterscheidet, wobei die Matrix von Eingabebereichen eine Anordnung ebener Eingabetasten umfasst, die durch ein Raster aus vorgegebenen Profilen, Höhen und/oder Formen voneinander getrennt sind, und eine Vielzahl von Positionierungsmarkierungen für die Tasten der Tastatur bilden, wobei die Dicke der Eingabebereiche im Millimeterbereich liegt, und
- eine untere, ebene Seite zum Einbau der Vorrichtung.

2. Vorrichtung nach Anspruch 1, **dadurch gekennzeichnet, dass** die untere Seite ferner drei Kontaktbereiche umfasst, die elektrisch geladen sind.

3. Vorrichtung nach Anspruch 1, **dadurch gekennzeichnet, dass** sie aus transparentem Kunststoff besteht.

4. Vorrichtung nach Anspruch 1, **dadurch gekennzeichnet, dass** wenigstens eine Teilmenge der Eingabetasten, der Anordnung der Eingabetasten der Matrix der Eingabebereiche, eine rechteckige Form aufweist.

5. Vorrichtung nach Anspruch 1, **dadurch gekennzeichnet, dass** die Anordnung von Eingabetasten dreizehn Tasten umfasst, wobei die Anordnung in eine Teilmenge von zehn numerischen Tasten, repräsentativ für eine numerische Tastatur, und eine Teilmenge von drei Validierungstasten aufgeteilt ist.

6. Vorrichtung nach Anspruch 5, **dadurch gekennzeichnet, dass** die Stelle, die der Taste Nummer Fünf entspricht, in ihrem Zentrum einen Positionierungsnippel umfasst.

7. Vorrichtung nach Anspruch 5, **dadurch gekennzeichnet, dass** die Anordnung der Tasten, die eine Tastatur bildet, repräsentativ für eine Tastatur zur Eingabe eines Geheimcodes an einem Zahlungsterminal ist.

8. Vorrichtung nach Anspruch 1, **dadurch gekennzeichnet, dass** die Dicke der Platte zwischen 1 mm und 3 mm liegt.

9. Dateneingabesystem, wobei das System ein Terminal umfasst, das mit einem Berührungsbildschirm ausgerüstet ist, wobei das System **dadurch gekennzeichnet ist, dass** es eine Dateneingabevorrichtung nach einem der Ansprüche 1 bis 8 umfasst.

10. Verfahren zur Eingabe von Daten auf einem Touchscreen eines Terminals, wobei das Verfahren zur Eingabe **dadurch gekennzeichnet ist, dass** es umfasst:
- einen Schritt des Einbaus, auf einem Berührungsbildschirm des Terminals, einer Dateneingabevorrichtung nach einem der Ansprüche 1 bis 8;
- einen Schritt des Erkennens, durch das Terminal, des Einbaus der Dateneingabevorrichtung; und
- ein Schritt der Eingabe, durch einen Benutzer, von Daten auf der Oberfläche der Dateneingabevorrichtung.

## Claims

1. A data input device, intended to be affixed to a touchpad of a terminal, the input device being **characterized in that** it comprises a substantially parallelepipedal plate, said plate comprising
- an upper face, at least part of which comprises a matrix of input areas forming a keyboard, said matrix of input areas being delimited on a right lateral edge by a first profile and on at least one left lateral edge by a second profile which is different from the first profile, said matrix of input areas comprising a set of flat input keys separated from each other by a grid of predetermined profiles, heights and/or shapes forming a plurality of positioning marks of said keys of said keyboard, the thickness of the input areas being of the order of a millimeter, and
- a flat lower face for laying said device.

2. The device according to claim 1 **characterized in that** the lower face further comprises three electrically charged contact areas.

3. The device according to claim 1, **characterized in that** it consists of transparent plastic material.

4. The device according to claim 1, **characterized in that** at least one subset of the input keys, of the set of input keys of the matrix of input areas, has a rectangular shape.

5. The device according to claim 1, **characterized in that** said set of input keys comprises thirteen keys, said set being decomposed into a subset of ten numeric keys, representative of a numeric keypad and a subset of three validation keys.

6. The device according to claim 5, **characterized in that** the location corresponding to the number five key comprises, in its center, a locating pin.

7. The device according to claim 5, **characterized in that** the key set forming a keyboard is representative of a keyboard for inputting a confidential code on a payment terminal.

8. The device according to claim 1, **characterized in that** the thickness of said plate is between 1 mm and 3 mm.

9. A data input system, the system comprising a terminal provided with a touch screen, the system being **characterized in that** it comprises a data input device according to any one of claims 1 to 8.

10. A data input method on a touchpad of a terminal, the input method being **characterized in that** it comprises:
- a step of laying, on a touch screen of said terminal, a data input device according to any one of claims 1 to 8;
- a step of detecting, by the terminal, the laying of said data input device; and
- a step of inputting, by a user, data on the surface of said data input device.
